# FASCICULE DE BREVET EUROPEEN

(11) **EP 3 157 873 B1**
(45) Date de publication et mention de la délivrance du brevet: **08.01.2020**
(21) Numéro de dépôt: 15728907.5
(22) Date de dépôt: 18.06.2015
(51) Int. Cl.: C02F 1/28, C02F 1/78

(54) **PROCÉDÉ DE TRAITEMENT D'EAU PAR ADSORPTION ET FILTRATION SUR LIT DE MATÉRIAU GRANULAIRE**
VERFAHREN ZUR BEHANDLUNG VON WASSER DURCH ADSORPTION UND FILTRATION AUF EINEM GRANULATMATERIALBETT
METHOD FOR WATER TREATMENT BY ADSORPTION AND FILTRATION ON A GRANULAR MATERIAL BED

(30) Priorité: 18.06.2014 FR 1455618
(43) Date de publication de la demande: 26.04.2017
(73) Titulaire: Veolia Water Solutions & Technologies Support, 94417 Saint-Maurice Cedex (FR)
(72) Inventeur: GAID, Abdelkader, F-75014 Paris (FR); SAUVIGNET, Philippe, F-35460 Saint-Etienne en Coglès (FR)
(74) Mandataire: Vidon Brevets & Stratégie
(86) Numéro de dépôt international: PCT/EP2015/063669
(87) Numéro de publication internationale: WO 2015/193410

(56) Documents cités:
- FR-A1- 2 342 769

## Description

### 1. Domaine de l'invention

L'invention concerne le domaine du traitement de l'eau.

Plus précisément l'invention concerne un procédé de traitement d'eau en vue d'en abattre la teneur en matières organiques ainsi que la teneur en micropolluants. De tels micropolluants peuvent notamment être constitués par des pesticides, des perturbateurs endocriniens, des résidus de médicaments ou des résidus de produits industriels.

Le procédé selon l'invention s'inscrit dans le cadre des procédés de traitement d'eau mettant en œuvre un matériau granulaire permettant la rétention des matières organiques et des micropolluants qu'elle contient.

Le procédé objet de l'invention trouve son application notamment dans le domaine de la potabilisation de l'eau, dans le domaine du traitement tertiaire des eaux usées et dans le domaine du traitement des eaux industrielles en vue de leur rejet dans le milieu naturel ou de leur réutilisation.

### 2. Art antérieur

On connaît dans l'art antérieur différents procédés de traitement d'eau mettant en œuvre un matériau granulaire pour retenir les matières organiques et, le cas échéant les micropolluants, contenus dans une eau ou un effluent.

Ainsi, les techniques les plus basiques mettent en œuvre une filtration sur un simple lit de sable. Lorsqu'un tel lit est colmaté, la filtration doit être stoppée pour le laver, généralement par envoi à contre-courant d'eau traitée (rétro lavage).

D'autres techniques utilisant le sable dans des dispositifs plus complexes permettent de nettoyer le sable pendant le fonctionnement du filtre, sans interruption de la filtration.

On connaît ainsi de la demande de brevet FR2342769A un procédé de filtration d'eau consistant à faire transiter une eau à traiter dans un réacteur contenant un lit de sable selon un flux ascendant, à une vitesse n'autorisant pas la fluidisation du lit mais autorisant le sable à migrer au fur et à mesure de la filtration vers la partie inférieure dudit réacteur; à prélever en continu en pied de réacteur, au moyen d'une canalisation prévu au sein du réacteur dans laquelle un gaz est insufflé, le sable sali; à nettoyer en continu le sable sali ainsi prélevé de façon à obtenir un sable nettoyé ; et, à réinjecter le sable ainsi nettoyé dans une partie supérieure du lit.

Le sable, s'il permet une filtration physique, ne permet toutefois pas la rétention des matières organiques non agglomérées.

Des procédés plus perfectionnés, couplés parfois à une filtration sur sable, mettent en œuvre une filtration sur un ou plusieurs matériaux granulaires adsorbants. Parmi ces matériaux adsorbants, le charbon actif est un matériau privilégié du fait de sa surface spécifique très élevée proportionnelle à sa capacité d'adsorption.

Certains procédés mettent ainsi en œuvre une étape de filtration de l'eau sur un lit de charbon actif en grain (CAG). Le charbon actif en grain est constitué de particules présentant une taille moyenne comprise entre 1 mm et 3 mm.

Un tel matériau présente des propriétés de filtration et d'adsorption.

Le CAG présente aussi l'avantage d'être régénérable, en ce sens qu'un traitement physique et/ou physico-chimique peut lui être appliqué de façon à restaurer au moins partiellement ses capacités d'adsorption. Pour ce faire, le procédé le plus couramment mis en œuvre consiste en une réactivation thermique, pratiquée dans un four à l'intérieur duquel règne une température élevée (aux alentours de 800°C) permettant aux molécules adsorbées d'être détruites par la chaleur. De la vapeur d'eau peut être utilisée pour parfaire cette régénération, le charbon actif en grain pouvant alors retrouver une structure très proche de sa structure initiale libre de tout polluant. La régénération du charbon actif en grain peut aussi être effectuée par lavage acide ou basique ce qui, toutefois, ne permet généralement pas au CAG de retrouver toutes ses performances initiales.

L'inconvénient principal de l'utilisation du charbon actif en grain dans le cadre des procédés de traitement d'eau réside dans le fait que ce matériau est très rapidement saturé par les matières qui s'y sont adsorbées.

Cette saturation rapide contraint l'utilisateur à le renouveler fréquemment. Les coûts d'exploitation s'en trouvent accrus.

De plus, la saturation rapide du CAG implique que les performances des traitements d'eau le mettant en œuvre ne sont ni stables dans le temps ni pérennes, rendant difficile, ou même proscrivant, leur utilisation pour certaines applications.

Il a par ailleurs été observé que, lorsque le charbon actif en grain était saturé, un relargage des substances organiques adsorbées pouvait se produire. Un tel relargage peut avoir des résultats négatifs sur la qualité finale de l'eau traitée. Pour éviter cette conséquence, le renouvellement du CAG doit intervenir rapidement.

En pratique, ce renouvellement ne peut se faire sans stopper le fonctionnement des installations. Il s'ensuit tous les inconvénients liés à une telle interruption et notamment une perte de productivité des installations. En pratique aussi, la mise en place ponctuelle d'une grande quantité de CAG neuf induit systématiquement une période de surperformance du système et par conséquent la nécessité d'ajuster les systèmes de désinfection, les demandes en oxydant (chlore) se trouvant modifiées.

Selon un autre type d'art antérieur, il est connu d'utiliser le charbon actif non pas en grain mais en poudre. Selon l'homme de l'art du traitement de l'eau, le charbon actif en poudre (CAP) est constitué de particules présentant une taille moyenne comprise entre 5 µm et 50 µm, préférentiellement entre 15 µm et 25 µm sans tenir compte des fines, bien plus faible donc que celle du charbon actif en grain. Le CAP présente en effet, par rapport au CAG, l'avantage de posséder une surface spécifique beaucoup plus importante.

Ces techniques mettent en œuvre des réacteurs contenant du CAP dans lesquels l'eau à traiter est mise en contact pendant un temps suffisamment long pour permettre la bonne adsorption sur le CAP des matières à éliminer qu'elle contient. Cette mise en contact peut être effectuée sur lit fixe ou fluidisé ou par injection de CAP dans un réacteur. Dans ce dernier cas, le mélange d'eau et de CAP fait, après l'étape de mise en contact, l'objet d'une étape de séparation conduisant d'une part à l'obtention d'un charbon actif en poudre chargé en matières adsorbées et d'autre part d'eau clarifiée. Cette étape de séparation peut être effectuée de différentes manières, principalement par décantation ou par filtration membranaire ou mécanique, ou même par fluidisation (changement de vitesse hydraulique).

Il est classique d'ajouter à l'eau et au CAP des produits chimiques coagulants ou floculants permettant la formation de flocs au sein des réacteurs afin de faciliter l'étape de séparation.

Le CAP chargé en matières organiques, récupéré sous forme de boues à la sortie de ces décanteurs ou membranes peut être traité, par exemple dans un hydrocyclone, de façon à le débarrasser de la matière organique qu'il a retenu. Le CAP ainsi traité peut être recyclé dans le réacteur.

Toutefois, s'il peut être recyclé, le CAP perd également peu à peu son pouvoir adsorbant et il est nécessaire de remplacer régulièrement une partie du CAP mis en œuvre au sein du réacteur par du CAP neuf. Des quantités de CAP neuf doivent donc parallèlement être injectées régulièrement dans le réacteur pour compenser la perte d'adsorption du CAP usité.

Bien que ce type de procédé autorise le remplacement d'une partie du CAP usité par du CAP neuf sans devoir mettre à l'arrêt les installations qui le mette en œuvre, il présente par ailleurs d'autres inconvénients.

Ainsi, le CAP issu des purges du système ne peut pas être régénéré en ce sens qu'on ne connaît pas de traitement efficace économiquement permettant de redonner au CAP son pouvoir adsorbant d'origine ou proche de celui-ci. Il en résulte la production de boues de CAP qui doivent être évacuées hors de l'usine et dont le traitement n'est pas sans inconvénient. Les boues doivent ainsi être déshydratées avant d'être transportées, ce qui augmente les couts associés à leur mise en décharge ou à leur incinération où à leur épandage agricole.

Le CAP étant un matériau cher, son utilisation dans le cadre du traitement de l'eau se heurte donc à des impératifs économiques, les techniques le mettant en œuvre présentant l'inconvénient d'impliquer, de ce fait, des coûts de fonctionnement élevés.

De plus, le traitement de l'eau par le CAP implique souvent de devoir recourir à l'utilisation parallèle de produits chimiques, à savoir des coagulants et/ou des floculants conduisant à l'obtention de volumes de boues importants qu'il est nécessaire de traiter dans des filières parallèles. Les coûts s'en trouvent donc augmentés.

Par ailleurs, il n'est pas possible d'utiliser des vitesses élevées pour faire transiter les eaux à traiter dans les réacteurs le contenant de façon à limiter les pertes en CAP. De ce fait, les réacteurs doivent présenter des volumes importants ce qui augmente également les coûts de tels traitements.

On notera aussi que lorsque l'étape de séparation est effectuée grâce à des membranes d'ultrafiltration, on observe des pertes en eaux élevées. En effet les fréquences de rétro lavage des membranes doivent être doublées ou triplées afin de limiter la formation d'un gâteau de CAP sur leurs surfaces engendrant des pertes de capacité de filtration. Il en résulte des volumes d'eaux sales et donc des pertes en eaux significativement augmentées.

### 3. Objectifs de l'invention

L'objectif de la présente invention est de proposer un procédé de traitement d'eau en vue d'en éliminer les matières organiques et les micropolluants mettant en œuvre un matériau granulaire adsorbant pouvant être renouvelé sans avoir à interrompre le traitement.

Un objectif de la présente invention est de divulguer un tel procédé qui permette de maintenir un niveau de traitement de l'eau essentiellement constant dans le temps.

Un autre objectif de la présente invention est de décrire un tel procédé induisant des coûts de traitement plus faibles que ceux des procédés de l'art antérieur, à niveaux de traitement sensiblement égaux.

Ainsi, un objectif de l'invention est de divulguer un tel procédé ne nécessitant pas l'utilisation conjointe de produits chimiques tels que des coagulants ou des floculants.

Corolairement, un objectif de la présente invention est aussi de proposer un tel procédé qui ne conduise pas à la formation de boues devant faire l'objet d'étapes de traitement spécifiques telles qu'un épaississement et une déshydratation.

Encore un objectif de la présente invention est de décrire un tel procédé qui, dans au moins certains mode de réalisation, peut être mis en œuvre dans des installations présentant un volume réduit par rapport à celles utilisées selon les procédés de l'art antérieur, à niveaux de traitement sensiblement égaux.

Encore un autre objectif de la présente invention est de divulguer un tel procédé qui, dans au moins certains modes de réalisation, peut être mis en œuvre avec un matériau granulaire facilement régénérable.

### 4. Exposé de l'invention

Ces objectifs, ainsi que d'autres qui apparaitront par la suite, sont atteints grâce à l'invention qui concerne un procédé de traitement d'eau par filtration sur un lit de matériau granulaire en vue d'en abattre la teneur en contaminants, ledit procédé comprenant les étapes consistant :
à faire transiter une eau à traiter dans un réacteur contenant ledit lit selon un flux ascendant à une vitesse n'autorisant pas la fluidisation dudit lit mais autorisant ledit matériau granulaire à migrer au fur et à mesure de la filtration vers la partie inférieure dudit réacteur ;
à prélever en continu en pied de réacteur, au moyen d'une canalisation dans laquelle un gaz est insufflé, du matériau granulaire sali constitué de matériau granulaire, de contaminants adsorbés sur celui-ci et de particules filtrées par celui-ci ;
à nettoyer physiquement, de façon continue ou intermittente, ledit matériau granulaire sali ainsi prélevé de façon à obtenir un matériau granulaire nettoyé essentiellement débarrassé desdits contaminants et desdites particules;
à réinjecter le matériau granulaire ainsi nettoyé dans ledit lit ;

Le procédé selon l'invention est caractérisé en ce que ledit matériau granulaire est un matériau granulaire adsorbant et en ce qu'il comprend :
une étape, continue ou intermittente, consistant à évacuer, pendant la filtration, une partie dudit matériau granulaire sali prélevé en pied de réacteur; et,
une étape, continue ou intermittente, consistant à introduire, pendant la filtration, dans ledit réacteur du matériau granulaire neuf en quantité suffisante pour compenser ladite partie de matériau granulaire évacué.

Ainsi, l'invention propose d'évacuer du réacteur du matériau granulaire adsorbant, celui-ci présentant par sa nature des capacités d'adsorption qui diminuent dans le temps, alors même que la filtration a lieu, et à remplacer le matériau ainsi évacué par du matériau granulaire adsorbant neuf, toujours pendant que la filtration a lieu.

Cette caractéristique du procédé permet le renouvellement du matériau adsorbant sans avoir à stopper la filtration, c'est-à-dire sans avoir à stopper le réacteur dans lequel le procédé est mis en œuvre.

La mise en œuvre du procédé selon l'invention n'impliquant pas d'arrêt de fonctionnement du réacteur, sa productivité est augmentée par rapport à des procédés de l'art antérieur.

Selon le procédé de l'invention, le matériau granulaire adsorbant est donc non seulement nettoyé en permanence mais également renouvelé en partie en permanence. Il est ainsi possible de maintenir un niveau de traitement sensiblement constant dans le temps, sans avoir à interrompre le fonctionnement du réacteur dans lequel le procédé est mis en œuvre.

En pratique, ce renouvellement pourra être effectué en évacuant par intermittence des quantités de matériau granulaire sali, ou encore en divertissant en continu une partie du flux de matériau granulaire sali évacué par le pied du réacteur.

Par rapport aux procédés de l'état de la technique mettant en œuvre une étape de mise en contact de l'eau à traiter avec un matériau granulaire adsorbant suivie d'une étape de séparation membranaire ou par décantation, le procédé selon l'invention présente le triple avantage de pouvoir être mis en oeuvre sur des installations de dimensions plus réduites, de ne pas conduire à la formation de boues impliquant un traitement spécifique et de ne nécessiter aucun apport de produits chimiques de type coagulant ou floculant. Il est ainsi plus économique que les procédés de l'art antérieur.

Il pourra être envisagé de mettre en œuvre ladite étape, continue ou intermittente, consistant à évacuer, pendant la filtration, une partie dudit matériau granulaire sali, en effectuant un tel prélèvement directement de la partie inférieure du réacteur, par exemple grâce à des moyens de purge prévus à cet effet.

Toutefois, préférentiellement, cette étape est effectuée en soutirant ladite partie depuis la canalisation dans laquelle un gaz est insufflé ("air-lift") utilisée pour prélever en pied de réacteur le matériau granulaire sali aux fins de le nettoyer. Dans ce cadre, on utilise pour la mise en œuvre du procédé un réacteur muni d'une telle canalisation montée externe par rapport au corps même du réacteur.

La mise en œuvre du prélèvement de matériau granulaire sali depuis une telle canalisation externe au réacteur facilite la mise en œuvre de cette étape. En effet, une telle canalisation peut être pourvue de moyens de purges, permettant d'évacuer de temps en temps des quantités de matériau granulaire sali depuis celle-ci.

Selon un autre mode de réalisation cette canalisation peut être pourvue de moyens permettant d'évacuer en continu une partie du flux de matériau transitant par celle-ci. Quelque soit le mode d'évacuation utilisé, il permet d'extraire du réacteur une partie de matériau granulaire en cours d'usage de façon à procéder au renouvellement progressif de celui-ci dans le réacteur en apportant dans le réacteur une partie de matériau granulaire neuf, permettant de compenser les quantités de matériau granulaire sali évacué et ainsi de maintenir dans le temps les performances de traitement du procédé.

On pourra envisager d'utiliser différents types de matériaux granulaires adsorbants dans le cadre du procédé selon l'invention. Ainsi, il pourra être envisagé d'utiliser notamment du charbon actif, de l'argile expansé ou encore des résines. Toutefois, le matériau utilisé sera préférentiellement du charbon actif en micrograins.

De façon préférée entre toutes, le charbon actif ne sera toutefois utilisé ni dans sa forme de « charbon actif en poudre » (CAP) ni dans sa forme de « charbon actif en grains » (CAG), selon les définitions de ces vocables par l'homme de l'art précisées ci-dessus, mais sous la forme d'agglomérats de particules de charbon actif, lesdits agglomérats présentant une taille moyenne comprise entre 200 µm et 1000 µm, préférentiellement entre 400 µm à 600 µm, et un indice d'iode supérieur à 1000 mg/g.

De tels agglomérats, disponibles dans le commerce présentent une granulométrie moins importante que celle du CAG et plus importante que celle du CAP. Ils présentent de plus des surfaces spécifiques, représentatives de leurs capacités d'adsorptions, du même ordre que celles du CAP. Ils présentent aussi l'avantage d'être auto-drainant, ce qui permet leur récupération après drainage sous une forme pratiquement sèche, et l'avantage de pouvoir être facilement régénérés par voie thermique. Ils permettent une excellente adsorption de la matière organiques et des micropolluants et présentent aussi un pouvoir de filtration.

Avantageusement, le procédé selon l'invention comprend une étape additionnelle d'égouttage dudit matériau granulaire, constitué des agglomérats de particules de charbon actif, sali évacué. Une telle étape d'égouttage est une étape simple permettant de mettre un tel matériau en condition de subir ensuite directement un procédé de régénération thermique. Selon une telle variante, il n'est pas nécessaire de faire subir au matériau granulaire sali une étape de traitement visant à en séparer les matières organiques retenues, étape qui conduirait à la production de boues. Le procédé selon l'invention, comme déjà indiqué ci-dessus, permet en effet de s'affranchir d'une telle production qui génère des coûts de traitement élevés et des installations spécifiques. Au contraire après un simple égouttage, le matériau granulaire peut être simplement stocké en fûts, en vue de son acheminement vers une unité de régénération thermique, pouvant être prise en charge par le fournisseur de ce matériau, en l'absence d'autre traitement. Les installations de traitement d'eau mettant en œuvre le procédé de l'invention ne nécessitent donc aucune chaine spécifique de traitement du matériau granulaire sali ni en vue de son nettoyage ni en vue de sa régénération, ce qui permet, par rapport aux techniques de l'art antérieur, à la fois de diminuer les coûts d'exploitation et les coûts de maintenance.

Selon une variante intéressante, le gaz insufflé dans la canalisation utilisée pour prélever le matériau granulaire sali en pied de réacteur comprend de l'ozone ou est constitué d'ozone, le procédé comprenant alors une étape supplémentaire d'oxydation des contaminants adsorbés sur le matériau granulaire prélevé grâce à ce gaz, comme par exemple le manganèse soluble ou le fer soluble. Un tel gaz constitué d'ozone ou incluant de l'ozone répond donc à la fonction physique requise pour opérer un air-lift mais répond de plus à une fonction chimique d'oxydation de la matière organique permettant sa dégradation. Les performances du procédé de filtration et adsorption selon l'invention s'en trouvent ainsi encore améliorées.

Préférentiellement, ladite étape consistant à faire transiter l'eau à traiter dans ledit réacteur est effectuée de façon telle que le temps de contact de ladite eau avec ledit matériau granulaire est compris entre 5 min et 20 min, préférentiellement entre 8 min et 12 min. De tels temps sont compatibles avec l'obtention de niveau de traitement de qualité tout en limitant le volume du réacteur.

Avantageusement, ladite étape consistant à faire transiter l'eau à traiter dans ledit réacteur est effectuée à une vitesse comprise entre 5 m/h et la vitesse de fluidisation, typiquement 50 m/h , et préférentiellement entre 10 et 20 m/h. De telles vitesses sont choisies pour permettre un temps de contact entre le matériau granulaire et l'effluent au sein du lit suffisant pour permettre l'adsorption de la matière organique et des micropolluants et une filtration conduisant à un abattement de la pollution et de la turbidité.

L'apport de matériau neuf pourra être effectué manuellement. Toutefois, selon une variante, le procédé comprend une étape de mesure de la qualité de l'eau traitée, et une étape de distribution automatique dans le réacteur de matériau granulaire neuf en fonction des résultats desdites mesures.

Avantageusement, ladite étape, continue ou intermittente, consistant à évacuer, pendant la filtration, une partie dudit matériau granulaire sali prélevé en pied de réacteur et ladite étape, continue ou intermittente, consistant à introduire, pendant la filtration, dans ledit réacteur du matériau granulaire neuf, sont effectuées de façon à observer un taux de renouvellement dudit matériau granulaire compris entre 2 g/m³ et 50 g/m³ d'eau à traiter, préférentiellement entre 10 g/m³ à 20 g/m³ d'eau à traiter.

Un tel taux de renouvellement permettra de maintenir dans la majorité des cas les performances du procédé.

Le procédé selon l'invention pourra être mis en œuvre dans une installation incluant un réacteur dont le corps présente une partie cylindrique et un pied essentiellement conique, ledit corps accueillant en son sein un lit de matériau granulaire adsorbant, le réacteur étant pourvu de moyens d'introduction d'eau brute, de moyens d'extraction, préférentiellement par surverse, d'eau filtrée prévus dans sa partie supérieure, et de moyens de prélèvement de matériau granulaire sali prévus dans sa partie inférieure incluant une canalisation dans laquelle un gaz est insufflé conçue pour ramener le matériau granulaire sali dans la partie supérieure du réacteur : de moyens de nettoyage de ce matériau granulaire sali ainsi prélevé de façon à obtenir d'une part un matériau granulaire nettoyé et des eaux sales; de moyens de réinjection du matériau granulaire ainsi nettoyé dans ledit lit et de moyens d'évacuation des eaux sales, l'installation comprenant des moyens d'évacuation continue ou intermittente d'une partie du matériau granulaire sali prélevé en pied de réacteur.

L'apport de matériau granulaire neuf pourra quant à lui être effectué manuellement ou bien automatiquement, en fonction de mesures effectuées sur l'eau traitée sortant du réacteur. Dans ce dernier cas, l'installation pour la mise en œuvre du procédé selon l'invention comprend préférentiellement des moyens de mesure de la qualité de l'eau traitée et des moyens de distribution automatique dans le réacteur de matériau granulaire neuf en fonction des résultats desdites mesures.

Préférentiellement, la canalisation dans laquelle un gaz est insufflé est externe au corps du réacteur, c'est-à-dire qu'elle n'est pas disposée à l'intérieur de ce corps et ne traverse donc pas le lit de matériau granulaire. Elle relie préférentiellement le pied du réacteur à sa partie supérieure. Elle est pourvue de moyens d'amenée d'un gaz permettant le transport du matériau granulaire sali en tête de réacteur. Ainsi, l'évacuation d'une partie du matériau granulaire sali peut se faire depuis cette canalisation ce qui facilite la mise en œuvre du procédé et la maintenance de l'installation.

Egalement préférentiellement, le matériau granulaire constituant le lit est constitué d'agglomérats de particules de charbon actif, lesdits agglomérats présentant une taille moyenne comprise entre 200 µm et 1000 µm, préférentiellement entre 400 µm à 600 µm, et un indice d'iode supérieur à 1000 mg/g.

Les moyens de nettoyage du corps du réacteur incluent une rampe hélicoïdale prévue dans la partie supérieure du corps du réacteur, la partie supérieure de cette rampe étant reliée à une extrémité de la canalisation dans laquelle du gaz est insufflé et qui l'alimente en matériau granulaire sali à nettoyer, et la partie inférieure de cette rampe communiquant avec le contenu du réacteur recevant l'eau filtrée qui connait un mouvement ascendant dans celui-ci. Grâce à de tels moyens, le matériau granulaire sali descend par gravité le long de la rampe en y rencontrant de l'eau filtrée qui connaît un chemin inverse. Ce croisement provoque le nettoyage progressif du matériau granulaire qui, à sa sortie de la rampe, est redistribué propre dans le lit.

Avantageusement, le dispositif pour la mise en œuvre du procédé selon l'invention comprend un déflecteur prévu au sein du corps du réacteur pour favoriser la migration du matériau granulaire vers le pied du réacteur.

Egalement avantageusement, le procédé est mis en œuvre dans une installation pourvue de moyens d'équirépartition permettant d'uniformiser la distribution d'eau brute dans le réacteur. Ces moyens incluent préférentiellement une pluralité de rampes disposées radialement. Les extrémités distales de ces rampes peuvent avantageusement être reliées entre elles par un élément renforçant leur structure, tel qu'un cerclage.

Enfin, selon une variante intéressante, les moyens d'amenée d'un gaz dans la canalisation sont des moyens d'amenée d'ozone ou d'un mélange d'air et d'ozone.

### 5. Liste des figures

L'invention, ainsi que les différents avantages qu'elle présente, seront plus facilement compris grâce à la description qui va suivre d'un mode non limitatif de réalisation de celle-ci donné en référence aux dessins dans lesquels :
- la figure 1 représente de façon schématique une installation pour la mise en œuvre du procédé selon l'invention ;
- la figure 2 représente, également de façon schématique, les moyens de distribution de l'eau brute dans le corps du réacteur représenté à la figure 1 ;
- la figure 3 représente, également de façon schématique, une vue en coupe du réacteur de l'installation représentée à la figure 1, détaillant notamment les moyens de nettoyage du matériau granulaire sali prélevé en pied de réacteur ;
- la figure 4 représente un graphe comparant l'abattement de la matière organique (« *chemical organic demand* » COD) dans le temps grâce à l'invention.

### 6. Description détaillée d'un mode de réalisation de l'invention

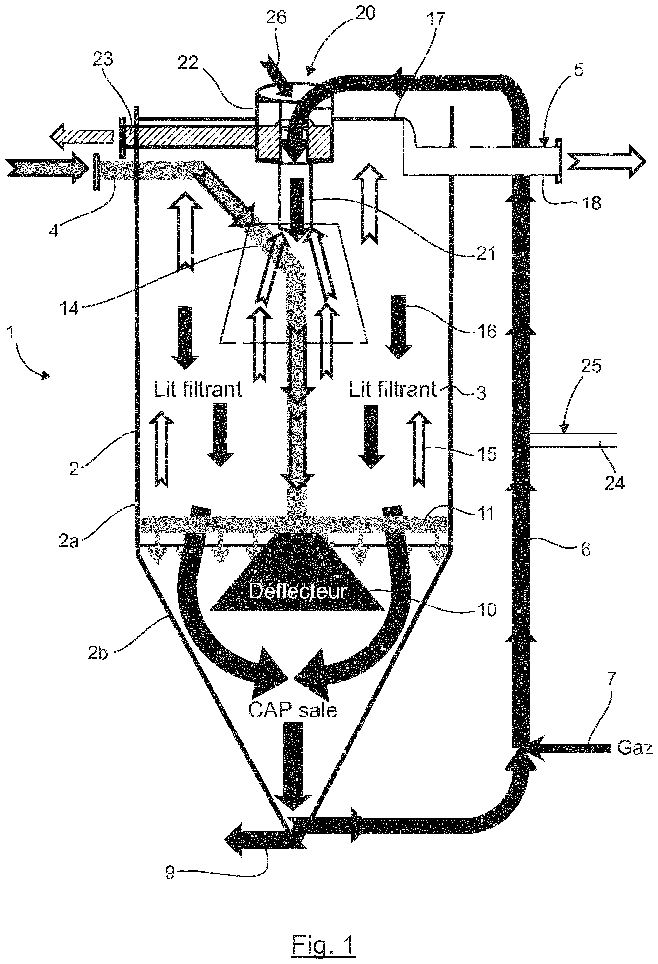

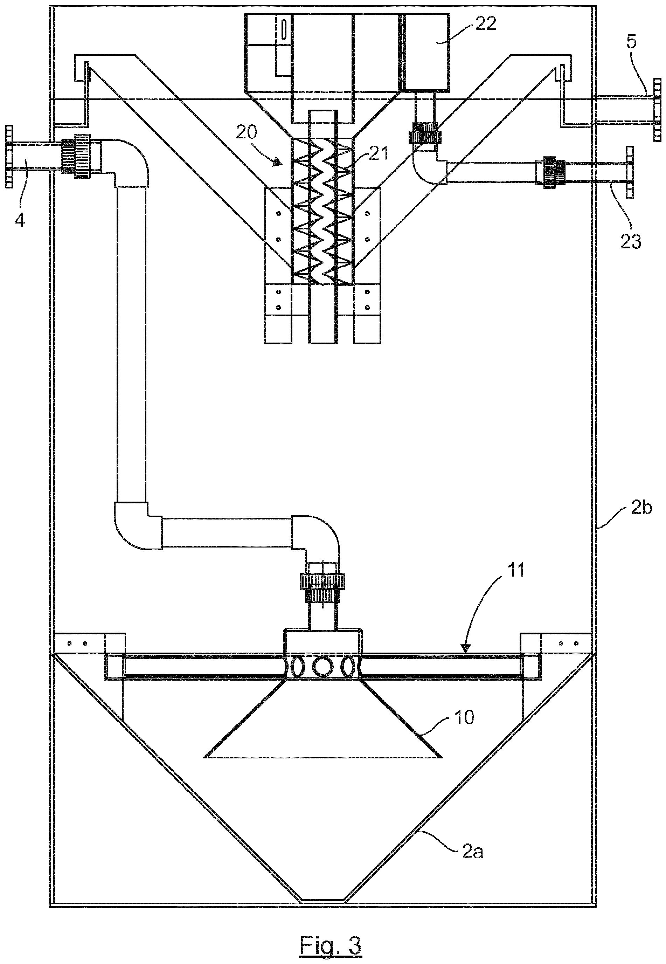

En référence aux figures 1 et 3, le procédé selon l'invention est mis en œuvre dans une installation qui inclut un réacteur 1 comprenant un corps de réacteur 2 à l'intérieur duquel est disposé un lit filtrant de matériau granulaire adsorbant 3.

Ce corps de réacteur 2 présente une partie supérieure cylindrique 2a et une partie inférieure conique 2b formant pied de réacteur.

Ce réacteur 1 est pourvu dans sa partie supérieure de moyens d'introduction d'eau à traiter 4 et de moyens d'extractions d'eau traitée 5.

Ce réacteur comprend également une canalisation 6, montée externe par rapport au corps 2 du réacteur 1. Une des extrémités de cette canalisation 6 est reliée à une ouverture prévue dans la partie inférieure conique 2b du corps de réacteur 2. L'autre extrémité de cette canalisation 6 abouche dans la partie supérieure cylindrique 2a du corps de réacteur 2. Cette canalisation 6 coopère avec des moyens d'amenée 7 de gaz, en l'occurrence de l'air, fourni par un compresseur (non représenté).

Des moyens de vidange 9 du contenu du réacteur sont par ailleurs prévus dans la partie inférieure du réacteur.

Les moyens d'introduction d'eau brute 4 dans le réacteur sont prolongés par une canalisation 14 conduisant l'eau brute à un dispositif d'équirépartition 11 de l'eau à traiter au sein du lit filtrant 3.

A l'intérieur du réacteur est également prévu un déflecteur 10 se présentant sous la forme d'un cône arrimé au centre du réacteur.

Enfin, le réacteur comprend également des moyens de nettoyage 20 du matériau granulaire prévu dans la partie supérieure du réacteur 1 et au niveau desquels arrive l'extrémité de la canalisation 6. Ces moyens de nettoyage incluent une rampe hélicoïdale 21 dont l'extrémité inférieure débouche à l'intérieur du réacteur tandis que l'extrémité supérieure coopère avec une boîte 22 reliée à une canalisation d'évacuation d'eau sale 23.

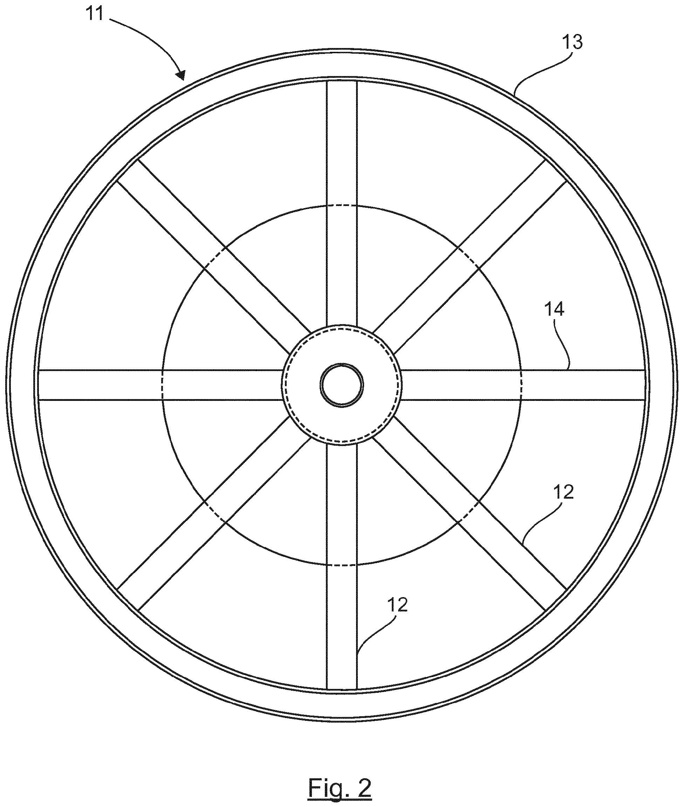

En référence à la figure 2, le dispositif d'équirépartition 11 de l'eau brute à traiter au sein du lit filtrant se présente sous la forme d'une pluralité de rampes radiales 12 percées d'orifices et reliées entre elles par une canalisation circulaire 13 également percée d'orifices.

La pente de la rampe hélicoïdale est conçue pour autoriser la descente par gravité de ce matériau granulaire le long de la rampe, à contrecourant d'une eau filtrée remontant celle-ci. L'eau filtrée constitue alors une eau de lavage se chargeant progressivement de matières organiques et nettoyant ainsi le matériau granulaire. Les eaux sales sont récupérées dans la boîte 22 prévue dans la partie supérieure des moyens de nettoyage 20 et évacuées par une canalisation 23.

Un déflecteur 10, constitué par un cône métallique, est prévu dans la partie inférieure du réacteur. Ce déflecteur 10 permet d'éviter que l'eau traitée connaisse des chemins privilégiés de transit au sein du lit filtrant 3.

Conformément à la mise en œuvre du procédé selon l'invention, le lit filtrant est constitué d'agglomérats de particules de charbon actif.

Les agglomérats en question présentent un diamètre moyen de 396 µm. Le coefficient d'uniformité de ce matériau est de 1,4. Sa densité apparente est de 510 g/l.

En référence à la figure 1, le fonctionnement de l'installation représenté pour la mise en œuvre du procédé a été le suivant.

Au cours des essais effectués, la vitesse de filtration a été de 3,7 m/h. pour un temps de séjour de l'eau dans le matériau granulaire de 9 min, correspondant à un temps de séjour global de l'eau dans le réacteur de 15 min. Le débit de l'air lift a quant à lui été fixé à 0,1 m³/h.

L'eau à traiter arrive par la canalisation 4 et est acheminée par la canalisation 14 jusqu'aux moyens d'équirépartition 11. Pour des besoins expérimentaux, cette alimentation est effectuée à un débit d'alimentation de 1 m³/h. Toutefois, des débits d'alimentation beaucoup plus élevés, de l'ordre de 10 m³/h à 15 m³/h, voir plus, pourront être utilisés au stade industriel.

L'eau transite dans le lit filtrant 3 de matériau granulaire adsorbant. Ce transit permet à la fois sa filtration et l'adsorption sur le matériau granulaire en question de la matière organique et des micropolluants quelle contient. Ce transit se fait selon un flux ascendant tel que représenté par les flèches non pleines 15. L'eau ainsi filtrée est évacuée par les moyens d'extraction d'eau traitée 5 qui incluent une surverse 17 et une canalisation d'évacuation 18.

Au sein du réacteur, au fur et à mesure qu'il se charge de matière organique, le matériau granulaire adsorbant migre vers la partie inférieure du réacteur délimitée par la partie conique 2b du corps 2 de celui-ci. Cette migration est symbolisée par les flèches pleines 16. Ce matériau granulaire sali est finalement capté par l'air-lift, provoqué par l'apport d'air grâce aux moyens 7 dans la canalisation 6, et renvoyé dans la partie supérieure du corps 2 du réacteur dans les moyens de nettoyage 20.

En référence à la figure 1, sur la canalisation 6 sont prévus des moyens d'évacuation 25 incluant une canalisation 24. Ces moyens d'évacuation 25 permettent d'évacuer, pendant la filtration, c'est-à-dire pendant le fonctionnement du réacteur, une partie du matériau granulaire sali prélevé en pied de réacteur et en cours d'acheminement vers les moyens de nettoyage 20. En pratique, durant les essais effectués, le débit de matières évacuées a été fixé à 0,08 m/h, soit 8 % du débit de traitement.

Pour compenser l'évacuation de ce matériau granulaire sali, qui peut être effectuée de façon continue ou intermittente, du matériau granulaire neuf est introduit dans le dispositif comme symbolisé par la flèche 26.

Le matériau granulaire sali arrive, grâce à l'air lift, dans les moyens de nettoyage 20 par la canalisation 6. Durant son trajet dans la rampe hélicoïdale 21, il rencontre de l'eau filtrée remontant par cette même rampe, ce qui permet de le nettoyer. L'avantage de l'utilisation d'une telle rampe hélicoïdale est d'accroître le contact entre le matériau sali et l'eau de lavage constituée par l'eau filtrée. En effet, il existait dans l'art antérieur des dispositifs de nettoyage pour ce type de réacteur selon lesquels seulement une partie du matériau granulaire sali rencontrait l'eau de lavage, ce qui conduisait à un nettoyage imparfait de celui-ci.

De l'eau, constituée par une eau à potabiliser provenant d'un barrage et ayant subi une étape de clarification, a été traitée grâce au procédé selon l'invention du 15 janvier au 17 février 2014. Avant clarification, l'eau présentait selon les périodes une température relativement stable variant de 11°C à 13°C et une teneur en matière organique (COD) comprise entre 4 mg/l et 5,5 mg/l.

A la sortie de la clarification les eaux brutes présentaient une teneur en COD comprise entre 3 mg/l et 4 mg/l selon la période.

Cette eau déjà clarifiée a été acheminée vers le dispositif représenté et décrit en référence aux figures 1 à 3.

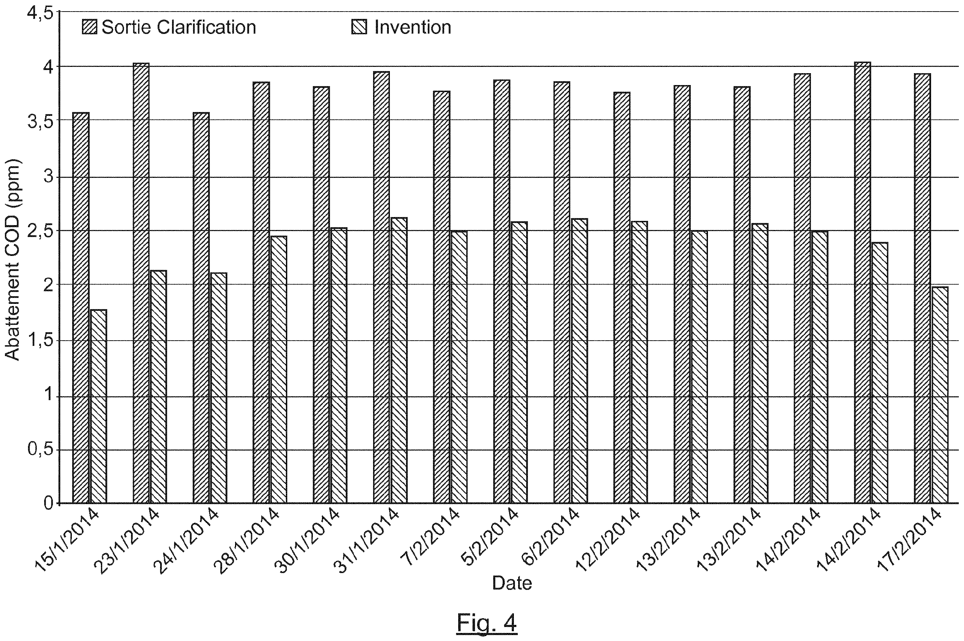

En référence à la figure 4 le procédé selon l'invention permet de faire passer cette COD de 3 mg/l - 4 mg/l à 1,7 - 2,5 mg/l environ.

## Revendications

1. Procédé de traitement d'eau par filtration sur un lit de matériau granulaire en vue d'en abattre la teneur en contaminants, ledit procédé comprenant les étapes consistant :
à faire transiter une eau à traiter dans un réacteur contenant ledit lit selon un flux ascendant à une vitesse n'autorisant pas la fluidisation dudit lit mais autorisant ledit matériau granulaire à migrer au fur et à mesure de la filtration vers la partie inférieure dudit réacteur, ledit réacteur étant pourvu dans sa partie supérieure de moyens d'introduction de ladite eau à traiter;
à prélever en continu en pied de réacteur, au moyen d'une canalisation dans laquelle un gaz est insufflé, un matériau granulaire sali constitué de matériau granulaire et de contaminants adsorbés sur celui-ci et de particules retenues par celui-ci ;
à nettoyer physiquement, de façon continue ou intermittente, à l'aide de moyens de nettoyage prévus dans le réacteur et incluant une rampe hélicoïdale prévue dans la partie supérieure du corps du réacteur, ledit matériau granulaire sali ainsi prélevé de façon à obtenir un matériau granulaire nettoyé essentiellement débarrassé desdits contaminants ;
à réinjecter le matériau granulaire ainsi nettoyé dans ledit lit ;
**caractérisé en ce que** ledit matériau granulaire est un matériau granulaire adsorbant, et **en ce qu'**il comprend :
une étape, continue ou intermittente, consistant à évacuer, pendant la filtration, une partie dudit matériau granulaire sali prélevé en pied de réacteur effectuée en soutirant ladite partie depuis ladite canalisation, celle-ci étant externe au corps dudit réacteur ; et,
une étape, continue ou intermittente, consistant à introduire, pendant la filtration, dans ledit réacteur du matériau granulaire neuf en quantité suffisante pour compenser ladite partie de matériau granulaire évacué.

2. Procédé selon la revendication 1 **caractérisé en ce que** ledit matériau granulaire est constitué d'agglomérats de particules de charbon actif, lesdits agglomérats présentant une taille moyenne comprise entre 200 µm et 1000 µm, et un indice d'iode supérieur à 1000 mg/g.

3. Procédé selon la revendication 2 **caractérisé en ce qu'**il comprend une étape additionnelle d'égouttage dudit matériau granulaire sali évacué.

4. Procédé selon la revendication 3 **caractérisé en ce qu'**il comprend une étape de stockage en fûts du matériau granulaire sali égoutté, en vue de son acheminement vers une unité de régénération, en l'absence d'autre traitement.

5. Procédé selon l'une quelconque des revendications 1 à 4 **caractérisé en ce que** ledit gaz comprend de l'ozone ou est constitué d'ozone et **en ce qu'**il comprend une étape d'oxydation des contaminants adsorbés sur ledit matériau granulaire prélevé en pied de réacteur grâce audit gaz.

6. Procédé selon l'une quelconque des revendications 1 à 5 **caractérisé en ce que** ladite étape consistant à faire transiter l'eau à traiter dans ledit réacteur est effectuée de façon telle que le temps de contact de ladite eau avec ledit matériau granulaire est compris entre 5 et 20 min, préférentiellement entre 8 et 12 min.

7. Procédé selon l'une des revendications 1 à 6 **caractérisé en ce que** ladite étape consistant à faire transiter l'eau à traiter dans ledit réacteur est effectuée à une vitesse comprise entre 5 m/h et 50 m/h.

8. Procédé selon l'une des revendications 1 à 7 **caractérisé en ce qu'**il comprend une étape de mesure de la qualité de l'eau traitée et une étape de distribution automatique dans le réacteur de matériau granulaire neuf en fonction des résultats desdites mesures.

9. Procédé selon l'une des revendications 1 à 8 caractérisé en que ladite étape, continue ou intermittente, consistant à évacuer, pendant la filtration, une partie dudit matériau granulaire sali prélevé en pied de réacteur, et ladite étape, continue ou intermittente, consistant à introduire, pendant la filtration, dans ledit réacteur du matériau granulaire neuf sont effectuées de façon à observer un taux de renouvellement dudit matériau granulaire compris 2 g/m³ et 50 g/m³ d'eau à traiter.

## Patentansprüche

1. Verfahren zur Behandlung von Wasser durch Filtration auf einem Granularmaterialbett, um den Schadstoffgehalt abzuschwächen, wobei das Verfahren die Schritte umfasst bestehend aus:
dem Transitierenlassen eines zu behandelnden Wassers in einen das Bett enthaltenden Reaktor, einem Strom entsprechend, der auf eine Geschwindigkeit ansteigt, die die Fluidisierung des Bettes nicht erlaubt, aber es dem Granularmaterial erlaubt, im Zuge der Filtration zum unteren Teil des Reaktors zu migrieren, wobei der Reaktor in seinem oberen Teil Mittel zum Einführen des zu behandelnden Wassers bereitstellt;
dem kontinuierlichen Entnehmen am Fuß des Reaktors mittels einer Kanalisation, in die ein Gas geleitet wird, eines verschmutzten Granularmaterials, bestehend aus Granularmaterial und aus auf diesem adsorbierten Schadstoffen und aus von diesem zurückgehaltenen Partikeln;
dem physischen Reinigen, auf kontinuierliche oder intermittierende Weise, mithilfe von Reinigungsmitteln, bereitgestellt in dem Reaktor und eine spiralförmige Rampe umfassend, bereitgestellt im oberen Teil des Körpers des Reaktors, des so entnommenen verschmutzten Granularmaterials, sodass ein im Wesentlichen von den Schadstoffen befreites Granularmaterial gewonnen wird;
dem erneuten Injizieren des so gereinigten Granularmaterials in das Bett;
**dadurch gekennzeichnet, dass** das Granularmaterial ein adsorbierendes Granularmaterial ist, und dadurch, dass es Folgendes umfasst:
einen Schritt, kontinuierlich oder intermittierend, bestehend aus dem Evakuieren während der Filtration eines Teils des am Fuß des Reaktors entnommenen verschmutzten Granularmaterials, ausgeführt durch Entnehmen des Teils aus der Kanalisation, wobei sich diese außerhalb von dem Körper des Reaktors befindet; und
einen Schritt, kontinuierlich oder intermittierend, bestehend aus dem Einführen in den Reaktor von neuem Granularmaterial während der Filtration in ausreichender Menge, um den Teil von evakuiertem Granularmaterial zu kompensieren.

2. Verfahren nach Anspruch 1, **dadurch gekennzeichnet, dass** das Granularmaterial aus Agglomerationen von Aktivkohlepartikeln besteht, wobei die Agglomerationen eine durchschnittliche Größe zwischen 200 µm und 1000 µm aufweisen, und einen Jodanteil höher als 1000 mg/g.

3. Verfahren nach Anspruch 2, **dadurch gekennzeichnet, dass** es einen zusätzlichen Schritt der Entwässerung des evakuierten verschmutzten Granularmaterials umfasst.

4. Verfahren nach Anspruch 3, **dadurch gekennzeichnet, dass** es einen Schritt der Lagerung in Fässern des entwässerten verschmutzten Granularmaterials zwecks seines Transports zu einer Regenerationseinheit in Ermangelung einer anderen Behandlung umfasst.

5. Verfahren nach einem der Ansprüche 1 bis 4, **dadurch gekennzeichnet, dass** das Gas Ozon umfasst oder aus Ozon besteht und dass es einen Schritt der Oxidation der auf dem am Fuß des Reaktors entnommenen Granularmaterial adsorbierten Schadstoffe dank des Gases umfasst.

6. Verfahren nach einem der Ansprüche 1 bis 5, **dadurch gekennzeichnet, dass** der Schritt, darin bestehend, das zu behandelnde Wasser in den Reaktor transitieren zu lassen, auf eine solche Weise ausgeführt wird, dass die Kontaktzeit des Wassers mit dem Granularmaterial zwischen 5 und 20 Min., bevorzugt zwischen 8 und 12 Min. liegt.

7. Verfahren nach einem der Ansprüche 1 bis 6, **dadurch gekennzeichnet, dass** der Schritt, darin bestehend, das zu behandelnde Wasser in den Reaktor transitieren zu lassen, bei einer Geschwindigkeit zwischen 5 m/h und 50 m/h ausgeführt wird.

8. Verfahren nach einem der Ansprüche 1 bis 7, **dadurch gekennzeichnet, dass** es einen Schritt der Messung der Qualität des behandelten Wassers und einen Schritt der automatischen Verteilung des neuen Granularmaterials in dem Reaktor in Abhängigkeit von den Ergebnissen der Messungen umfasst.

9. Verfahren nach einem der Ansprüche 1 bis 8, **dadurch gekennzeichnet, dass** der Schritt, kontinuierlich oder intermittierend, darin bestehend, während der Filtration einen Teil des am Fuß des Reaktors entnommenen verschmutzten Granularmaterials zu evakuieren, und der Schritt, kontinuierlich oder intermittierend, daraus bestehend, in den Reaktor während der Filtration neues Granularmaterial einzuführen, auf eine solche Weise ausgeführt werden, dass eine Erneuerungsquote des Granularmaterial zwischen 2 g/m³ und 50 g/m³ von zu behandelndem Wasser beobachtet wird.

## Claims

1. Method for treating water by filtration on a granular bed in order to reduce its content in contaminants, said method comprising the steps for:
- making a water to be treated travel in transit in a reactor containing said bed in an upward flow at a speed that does not permit the fluidization of said bed but permits said material to migrate, as and when the filtration takes place, towards the lower part of said reactor, said reactor being provided in its upper part with means for introducing said water to be treated ;
- continuously removing a fouled granular material at the foot of the reactor with the help of cleaning means providing within the reactor and including an helicoidal ramp, by means of a piping into which a gas is insufflated, said fouled granular material being constituted by granular material and contaminants adsorbed on said granular material and by particles retained by said granular material;
- continuously or intermittently carrying out the physical cleansing of said fouled granular material thus removed, so as to obtain a cleansed granular material essentially rid of said contaminants;
- reinjecting the granular material thus cleansed into said bed;
**characterized in that** said granular material is an adsorbent granular material and **in that** the method comprises:
a continuous or intermittent step for the discharging, during the filtration, of a part of said fouled granular material removed at the foot of the reactor performed by drawing out said part from said piping, this piping being external to the body of said reactor; and
a continuous or intermittent step for the introduction into said reactor, during the filtration, of fresh granular material in a quantity sufficient to compensate for said part of granular material discharged;

2. Method according to claim 1 **characterized in that** said granular material is constituted by agglomerates of active carbon particles, said agglomerates having an average size of 200 µm to 1000 µm, and an iodine value of over 1000 mg/g.

3. Method according to claim 2 **characterized in that** it comprises an additional step for draining said discharged, fouled granular material.

4. Method according to claim 3 **characterized in that** it comprises a step for storing the drained, fouled granular material in barrels so that it can be conveyed towards a regeneration unit, without any other treatment.

5. Method according to any one of the claims 1 to 4 **characterized in that** said gas comprises ozone or is constituted by ozone and **in that** it comprises a step of oxidation, by means of said gas, of the contaminants adsorbed on said granular material removed at the foot of the reactor.

6. Method according to any one of the claims 1 to 5 **characterized in that** said step for making the water to be treated travel in transit in said reactor is performed in such a way that the time of contact of said water with said granular material is from 5 to 20 min, preferably from 8 to 12 min.

7. Method according to one of the claims 1 to 6 **characterized in that** said step for making the water to be treated travel in transit in said reactor is carried out at a speed of 5 m/h to 50 m/h.

8. Method according to one of the claims 1 to 7 **characterized in that** it comprises a step for measuring the quality of the water treated and a step for the automatic dispensing of fresh granular material into the reactor according to the results of said measurements.

9. Method according to one of the claims 1 to 8 **characterized in that** said continuous or intermittent step for the discharging, during the filtration, of a part of said fouled granular material removed at the foot of the reactor and said continuous or intermittent step for the introduction into said reactor, during the filtration, of the fresh granular material are performed so as to comply with a rate of renewal of said granular material ranging from 2 g/m³ to 50 g/m³ of water to be treated.
